Europäisches Patentamt

European Patent Office

Office européen des brevets

(19)

(11) Numéro de publication: **0 103 665**
**A1**

(12) # DEMANDE DE BREVET EUROPEEN

(21) Numéro de dépôt: **82810392.9**

(22) Date de dépôt: **21.09.82**

(51) Int. Cl.³: **B 23 B 13/12**
**B 23 B 13/08**

(43) Date de publication de la demande:
**28.03.84  Bulletin  84/13**

(84) Etats contractants désignés:
**CH DE FR GB IT LI SE**

(71) Demandeur: **SAMECA S.A.**
**7 rue Fritz Oppliger**
**CH-2500 Bienne 6(CH)**

(72) Inventeur: **Vandevoir, Claude**
**Vignolans 5**
**CH-1520 La Neuveville(CH)**

(72) Inventeur: **Geiser, Marc**
**La Colline 306**
**CH-2603 Péry(CH)**

(74) Mandataire: **Tordion, Serge**
**Cabinet de Conseil en brevets 23, rue du Marché-Neuf**
**Case postale 182**
**CH-2500 Bienne 3(CH)**

(54) **Dispositif de guidage d'une barre de matière au cours de son usinage dans un tour automatique.**

(57) Pour empêcher les barres de matière (2) usinées dans un tour automatique de vibrer, deux coussinets (35) en forme de couronnes semicylindriques sont disposés entre le tour, qui pince l'extrémité antérieure des barres (2), et le tube de guidage (7), dont la tête rotative (11, 18) du poussoir (8) en maintient l'extrémité postérieure. Les coussinets (35) sont simplement glissés dans la bague intérieure (36) d'un roulement à billes (31), qui est monté de façon permanente dans une lunette fixe (28). Selon le diamètre de la barre (2) à usiner, l'usager pratique dans les coussinets (35) une ouverture (38) adaptée au profil de cette barre de manière qu'ils tournent avec elle en l'enserrant fermement. En traversant la lunette (28) avant d'entrer dans la broche du tour, l'extrémité de la tête rotative (11, 18) du poussoir éjecte les coussinets (35) en déformant légèrement l'anneau (39), qui les retient normalement. Les coussinets (35) sont remis en place lors du chargement d'une nouvelle barre (2).

EP 0 103 665 A1

./...

Fig. 2

- 1 -

## DISPOSITIF DE GUIDAGE D'UNE BARRE DE MATIERE AU COURS DE SON USINAGE DANS UN TOUR AUTOMATIQUE

Dans un tour automatique de capacité donnée, il est usuel d'usiner non seulement des barres de matière de diamètre correspondant à cette capacité, mais aussi des barres plus petites. En général, un tel tour est utilisé pour usiner des barres de tout diamètre, jusqu'au quart de sa capacité. Ainsi, un tour ayant une capacité de 80 mm sert habituellement à usiner des barres de 20 à 80 mm.

Lorsque la barre qu'on usine est plus petite que le tube de guidage, il ne suffit plus d'en soutenir les deux extrémités, à l'avant, par l'unité de serrage du tour, et à l'arrière, par le poussoir. Sous l'effet de la force centrifuge aux grandes vitesses de rotation et en raison des excentricités inévitables, la barre se mettrait à vibrer de façon inadmissible, si des moyens n'étaient prévus pour neutraliser les effets perturbateurs de ces vibrations qui, non seulement produisent un bruit désagréable dans le tube de guidage, mais se propagent au-delà de l'unité de serrage de la broche de la poupée, jusque dans la partie de la barre qui se trouve dans le champ de travail des outils du tour. Si un coussin d'huile formé entre la barre en cours d'usinage et le tube de guidage de cette barre neutralise efficacement ces vibrations, quand le diamètre de la barre n'est que de quelques millimètres inférieur à celui du tube, un tel coussin est insuffisant, voire totalement inopérant, quand la différence entre les diamètres de la barre et du tube est plus grande.

Il existe à ce jour deux solutions pour neutraliser les dites vibrations dans ce cas. La première consiste à introduire dans le tube de guidage correspondant à la capacité du tour, des tubes réducteurs l'un dans l'autre, jusqu'à cinq pour les barres les plus petites (Werkstatt und Betrieb, Vol. 110, N° 12 décembre 1977, pages 903 et 904).

Cette solution est toutefois affectée de plusieurs inconvénients. Tout d'abord, elle est encombrante. Il faut, en effet, ménager à côté du tour, en avant du tube de guidage dont on bascule latéralement l'extrémité antérieure pour son chargement, une place libre beaucoup plus grande que pour ce seul chargement. Si 3 m suffisent pour charger une nouvelle barre de matière, il faut environ 1,5 m en plus pour mettre en place un tube réducteur. Ce surcroît est conditionné par la présence du poussoir dans le tube réducteur, dont l'extrémité antérieure doit arriver à proximité de l'unité de serrage de la broche de la poupée du tour, sans que son extrémité postérieure sorte du tube de guidage. De plus, la mise en place d'un tube réducteur est délicate. Pour qu'il soit bien coaxial au tube dans lequel il a été introduit, il est entouré de garnitures en matière molle, caoutchouteuse ou similaire. Il faut donc veiller soigneusement que ces garnitures ne soient pas déchirées ni même déplacées le long du tube réducteur, lorsqu'on le met en place. Enfin, le retrait d'un tel tube réducteur est salissant. Si l'intérieur du tube réducteur ayant servi peut être vidé d'huile par aspiration, les espaces annulaires autour de ces tubes réducteurs sont, en revanche, remplis d'huile, qu'il s'agit d'étancher au fur et à mesure que les réducteurs sont retirés et qui est alors perdue.

La seconde solution consiste à placer, en un endroit de la barre de matière situé derrière le tour, des organes qui l'emprisonnent de façon à l'empêcher de vibrer et qui s'effacent au passage du poussoir. Plusieurs exécutions en ce sens sont connues. L'une d'elles (US - A - 2,608,746) empêche la barre de vibrer, simplement à l'aide de deux bras rectilignes agissant en deux points approximativement diamétralement opposés de la barre et situés à la sortie du tube de guidage. Pour qu'ils remplissent vraiment leur rôle, leur écartement doit être modifié chaque fois que change le diamètre des barres usinées. Comme ces bras sont réglés individuellement, il n'est toutefois pas aisé de les fixer dans des positions qui tiennent la barre vraiment dans l'axe de la broche du tour. Par ailleurs, du fait qu'ils sont fixes, une usure rapide peut se produire au point de contact avec la barre ou alors, s'ils sont assez durs, ils peuvent marquer la barre.

Il existe toutefois des exécutions (GB - A - 1,063,266) dans lesquelles il n'y a pas lieu de régler la position des organes qui emprisonnent la barre de matière en cours d'usinage, selon le diamètre de cette dernière. Des ressorts agissant sur ces organeas leur permettent de s'écarter plus ou moins. Dans le cas des barres de matière plus petites que l'écartement minimum des parties actives des dits organes, ces derniers, qui se trouvent à peine au quart de la longueur de la barre au début de son usinage, n'empêchent alors pas à coup sûr un ventre de se former à l'intérieur du tube de guidage. Quant aux barres plus grandes que l'écartement minimum des dits organes, elles ne sont pas centrées par ces derniers; c'est elles qui déterminent la position de ces organes et pour peu que la vitesse de rotation de la barre corresponde à une fréquence propre du système de ressorts agissant sur les dits organes, l'ensemble risque d'entrer en résonnance. Enfin, ces organes, qui ne tournent pas davantage avec la barre de matière que dans l'exécution mentionnée précédemment, sont exposés aux mêmes phénomènes d'usure.

Une autre exécution connue (GB - A - 1,212,152) évite certains inconvénients des exécutions précédentes par le fait que la barre de matière en cours d'usinage est complètement entourée par une paire de coussinets adaptés à son diamètre, facilement interchangeables dans des mâchoires qui sont disposées, non à l'extrémité du tube de guidage, mais le long de celui-ci, à l'endroit où le risque qu'un ventre ne se produise est le plus grand, et qui sont amenés dans une position fermée bien déterminée par un mécanisme à genouillère. Ces résultats ne sont toutefois acquis qu'au prix de sérieuses complications. Pour ouvrir et fermer les mâchoires en question, il faut un mécanisme de commande spécial, associé, de plus, à une sonde sensible à l'approche du poussoir pendant l'usinage et à son passage lors du recul pour permettre le chargement d'une nouvelle barre de matière. Au lieu d'être en une pièce rigide, le tube de guidage doit être composé de deux tronçons indépendants, augmentant par là le risque de défauts d'alignement. Enfin, les coussinets prévus sont exposés à un échauffement et une usure rapide par friction soit avec la barre, qui tourne dans ceux-ci, soit avec les mâchoires, dans lesquelles la barre les entraîne en rotation.

On connaît toutefois des exécutions très simples (US - A - 3,074,544), dans lesquelles des coussinets semi-cylindriques sont tout bonnement glissés dans un logement cylindrique formé à l'extrémité antérieure du tube de guidage. Quand le poussoir arrive à cet endroit, il les éjecte purement et simplement de leur logement, sans avoir à recourir à un mécanisme de commande quelconque. Ces exécutions ont cependant l'inconvénient que les coussinets, étant fixes, sont exposés à un échauffement et à une usure rapide.

L'état de la technique contient encore deux exécutions. Une première (EP - B - 0 026 042), qui ne se distingue des deux précédentes que par le fait que les coussinets ne sont pas retenus dans leur logement uniquement par friction, mais par des crochets escamotables sous la poussée du piston. Ces coussinets, immobiles en rotation, sont exposés aux mêmes inconvénients que ceux des deux exécutions précédentes.

Si, dans l'autre exécution (DE - A - 2 930 310), les organes empêchant la barre de vibrer tournent avec elle, la construction est nettement plus compliquée. Ces organes sont constitués par des mors adaptés au diamètre de la barre, qui sont pivotés sur un premier manchon coulissant et rotatif sur un second manchon fixé à l'extrémité antérieure du tube de guidage. Le changement de ces mors, lorsque des barres de diamètres différents doivent être usinées, est laborieux. En outre, ils sont tenus en position fermée par des ressorts et par engagement dans un troisième manchon, qui est fixé à l'extrémité postérieure de la broche de poupée du tour et qui les entraîne en rotation avec cette dernière. Une tringlerie, sensible au passage du poussoir, retire ces mors du troisième manchon et en produit l'ouverture pour livrer passage au poussoir.

Le dispositif de guidage selon l'invention, qui est du type défini par le préambule de la revendication 1, réunit les avantages de solutions connues, en évitant leurs inconvénients.

On remarquera, en effet, qu'il est plus facile de prévoir une antifriction entre une pièce montée en permanence dans un support et ce dernier qu'entre des coussinets éjectables et interchangeables et la pièce qui les supporte. De plus, le montage d'une pièce rotative dans un support offre une grande stabilité à cette pièce. Par ailleurs, le jeu entre la barre de matière et des coussinets pouvant tourner avec elle peut être ajusté manifestement plus serré que dans le cas de coussinets fixes, puisqu'il suffit que ces coussinets laissent coulisser la barre et que ce mouvement est relativement lent. Un dispositif présentant les caractéristiques de la revendication 1 tient donc la barre beaucoup plus fermement dans l'axe de la poupée du tour qu'un dispositif à coussinets fixes ou qu'un dispositif dans lequel les coussinets sont montés dans une partie en porte-à-faux d'une pièce rotative.

Les formes spéciales d'exécution définies par les revendications 2 et 3 assurent une antifriction aussi simple qu'efficace à l'ensemble comprenant les coussinets destinés à tourner avec la barre de matière en cours d'usinage, cet ensemble étant de surcroît peu volumineux.

Quant à celles définies par les revendications 4 et 5, elles évitent l'éjection inopportune des coussinets à l'aide de moyens aisément réalisables.

Les moyens définis par la revendication 6 ont le double avantage de réduire le frottement de glissement des coussinets sur la barre de matière en cours d'usinage lors des variations de la vitesse de rotation de cette dernière, et de récupérer l'huile qui entoure inévitablement la partie du poussoir sortant du tube de guidage.

Les revendications 7 et 8 ont l'avantage de réduire la masse des dits coussinets, donc leur énergie cinétique au moment de l'éjection, quelque diamètre que les barres aient, cela sans entraîner de modification des éléments normalement inamovibles du dispositif de guidage.

Deux formes d'exécution du dispositif de guidage selon l'invention sont représentées schématiquement et à simple titre d'exemple au dessin dans lequel:

la Fig. 1 est une vue générale en élévation commune aux deux formes d'exécution;

la Fig. 2 est une coupe longitudinale à grande échelle d'une partie de la Fig. 1, qui représente la première forme d'exécution, et

la Fig. 3 est une coupe analogue à la Fig. 2, qui représente la seconde forme d'exécution.

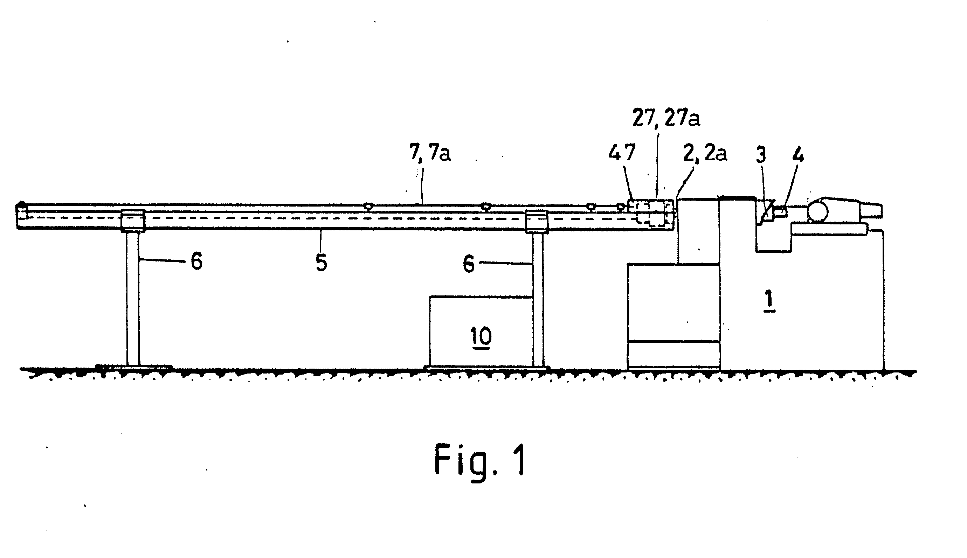

Le dispositif de guidage représenté à la Fig. 1 assure l'alimentation d'un tour automatique 1, en soutenant une barre de matière 2, 2a qu'il fait avancer progressivement dans la broche 3 de la poupée du tour 1, en vue d'usiner à l'extrémité antérieure 4 de la barre 2, 2a une série de pièces identiques au cours de cycles d'opérations déterminés. Ce dispositif de guidage comprend un chéneau 5, soutenu par des montants 6 et dans lequel est monté un tube de guidage 7, 7a qui est coaxial à la broche 3.

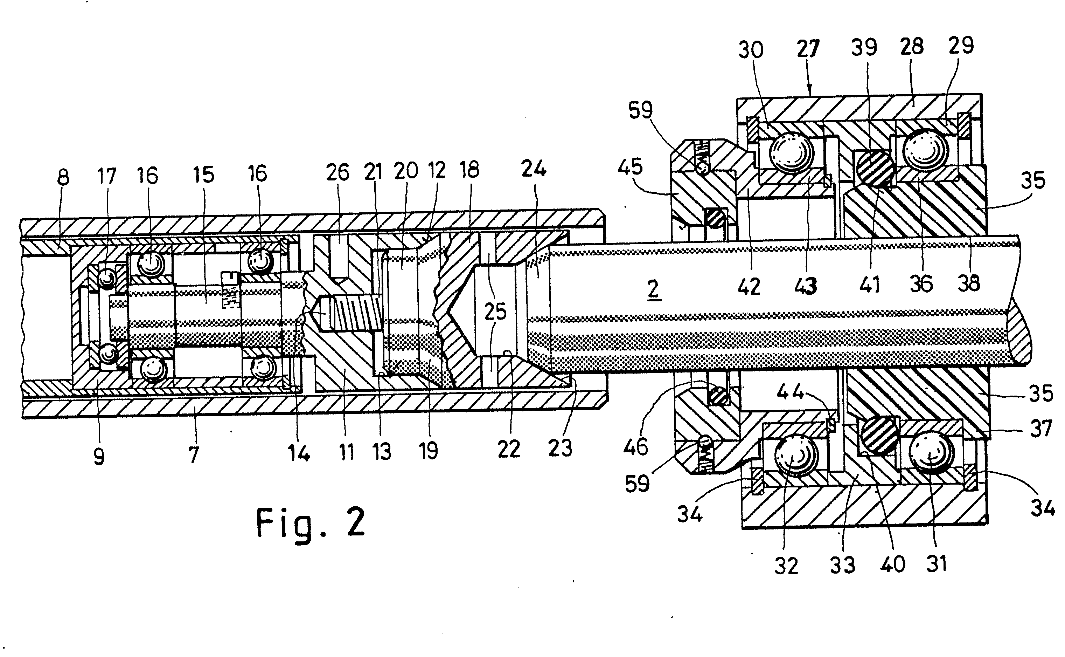

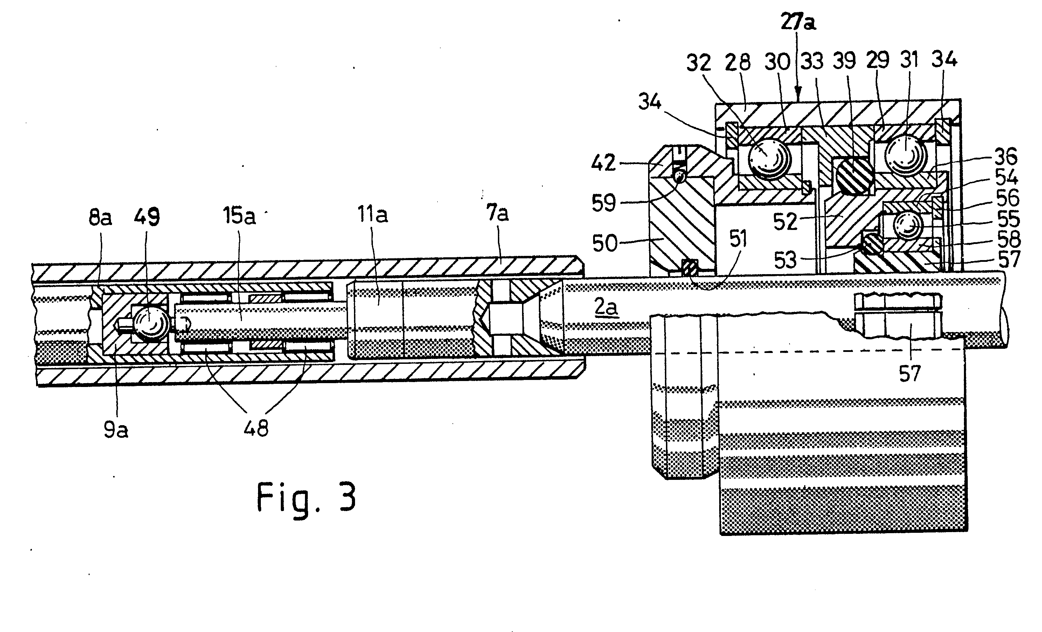

Pour faire avancer la barre 2, 2a à travers la broche 3, lorsqu'une pièce terminée a été tronçonnée de cette barre et afin de permettre l'usinage de la pièce suivante de la série, le tube 7, 7a contient un poussoir dont on ne voit que la partie antérieure dans les Fig. 2 et 3. Ce poussoir est ajusté à l'alésage du tube 7, 7a de façon à pouvoir coulisser tout à fait librement dans ce tube, mais avec le plus petit jeu possible. Dans les deux formes d'exécution, il comprend un corps immobile en rotation, composé essentiellement d'une chemise cylindrique 8, 8a, d'une calotte 9, 9a, engagée à frottement gras dans la partie antérieure de la chemise 8, 8a et d'un embout (non représenté) fixé à son extrémité postérieure et qui obture l'alésage du tube 7, 7a de façon suffisamment étanche pour former un piston hydraulique dans le tube 7, 7a. Le poussoir est, en effet, actionné de façon connue par de l'huile, qui est amenée sous pression à l'arrière du tube 7, 7a par une tubulure (non représentée) à partir d'une pompe (non représentée) contenue dans le caisson de commande 10 (Fig. 1), qui contient également un réservoir d'huile (non représenté). Cette pompe permet aussi d'aspirer l'huile contenue dans le tube 7, 7a derrière le poussoir, et de la ramener dans le réservoir d'huile du caisson 10, tout en faisant reculer le poussoir le long du tube 7, 7a.

Dans la première forme d'exécution (Fig. 2) du dispositif de guidage selon l'invention, qui est destinée à soutenir des barres de matière 2 dont le diamètre est égal à la·capacité du tour 1 ou quelque peu plus petit, le poussoir comprend une tête 11 qui présente un siège tronconique 12, un alésage 13 et un trou central fileté 14. Par l'intermédiaire d'un tigeron central 15, pivoté dans deux roulements à billes radiaux 16, engagés dans l'extrémité antérieure de la chemise 8, et sur un roulement à billes axial 17, logé dans la calotte 9, la tête 11 peut tourner librement par rapport au corps 8, 9 du poussoir. Un raccord 18, présentant une face tronconique 19 et une portée 20 ajustées respectivement au siège 12 et à l'alésage 13, est fixé à la tête 11 par un téton central fileté 21, vissé dans le trou 14. Le raccord 18, qui fait ainsi partie intégrante de la tête rotative du poussoir, se présente avec un trou central 22 et un cône d'engagement 23 dans sa face antérieure. L'usager peut, au choix, former un biseau 24, correspondant au cône 23, à l'extrémité postérieure des barres de matière 2, ou laisser cette extrémité brute et agrandir le trou 22 au diamètre des barres qu'il veut usiner. Enfin, le raccord 18 présente un trou diamétral 25 et la tête 11 un trou radial 26 pour permettre le vissage du raccord 18 dans la tête 11 et surtout son dévissage.

Le raccord 18, la tête 11 et la chemise 8, qui font partie du poussoir, ont le même diamètre, qui correspond à la capacité du tour 1. Lorsque les barres qu'il s'agit d'usiner ont le même diamètre que le poussoir ou un diamètre très voisin de ce dernier, on pourrait renoncer à visser un raccord dans la tête 11. Dans tous les cas, il faut cependant préparer l'extrémité postérieure de ces barres en y tournant un biseau de même angle d'ouverture que le siège 12 ou que le cône d'engagement 23. En l'absence d'un raccord, c'est la tête 11 elle-même qui tient lieu de palier à l'extrémité postérieure des barres.

A propos des barres de diamètre très voisin de la capacité du tour 1, il convient de remarquer que le poussoir 8, 9, 11, 18 suffit à neutraliser leur vibration, pourvu que l'espace libre entre la barre de matière 2 et le tube 7 soit rempli d'huile.

Pour neutraliser les vibrations des barres de diamètre quelque peu plus petit, le dispositif de guidage selon l'invention comprend des moyens 27, 27a, qui sont disposés entre le tube 7, 7a et le tour 1 (Fig. 1). Ces moyens sont logés dans une lunette 28, qui est solidaire du chéneau 5 faisant partie du bâti du dispositif de guidage. Les bagues extérieures 29, 30 de deux roulements à billes 31, 32, séparées par une bague d'espacement 33, sont fixées dans la lunette 28 par des circlips intérieurs 34.

Dans la première forme d'exécution (Fig. 2), les moyens neutralisant les vibrations des barres de matière en cours d'usinage comprennent essentiellement deux coussinets 35 en forme de couronnes semicylindriques, qui sont plaqués l'un contre l'autre par l'alésage de la bague intérieure 36 du roulement à billes 31, dans lequel ils sont engagés à frottement doux jusqu'à ce qu'un épaulement 37 des coussinets 35 bute contre la bague 36. Les coussinets 35 sont faits en matière synthétique et sont manifestement très simples à fabriquer. L'ouverture 38, qu'ils délimitent entre eux, est ajustée à frottement doux au profil circulaire ou polygonal des barres de matière qu'il s'agit d'usiner, de façon que ces dernières puissent coulisser librement dans les coussinets 35, mais sans vibrer à l'intérieur de ceux-ci.

Les coussinets 35 sont retenus axialement en place dans la bague 36 par un anneau torique 39 en matière caoutchouteuse ou similaire, que la bague 36 retient axialement en place dans une cage 40 formée dans la bague d'espacement 33. Un segment annulaire de l'anneau 39 entre librement dans une gorge périphérique 41 des coussinets 35, de sorte que ces derniers et la bague 36 peuvent tourner sur eux-mêmes avec un frottement très réduit.

Un tasseau 42 est fixé à la bague intérieure 43 du roulement à billes 32 par un circlip extérieur 44. Comme les coussinets 35, le tasseau 42 peut tourner librement avec la bague 43. Il contient un disque 45 présentant une ouverture centrale dont la paroi est garnie d'un anneau torique 46 en matière caoutchouteuse ou similaire. Cet anneau fait saillie de la paroi du disque 45 et son diamètre interne est légèrement inférieur à celui du poussoir.

Vu l'ajustement de l'ouverture 38 des coussinets 35, ceux-ci tournent avec la barre de matière 2 pendant l'usinage de cette dernière. Lorsque la vitesse de rotation de la barre 2 change, en particulier après son chargement, quand l'unité de serrage de la broche de poupée du tour commence à l'entraîner en rotation à grande vitesse, un certain patinage de la barre 2 à l'intérieur des coussinets 35 est inévitable. Ce patinage est cependant bref, en raison de l'inertie relativement faible de l'ensemble rotatif du dispositif de guidage selon l'invention, qui comprend, outre les coussinets 35, encore la bague 36 et les billes du roulement 31. Ainsi, la barre 2 ne produit pratiquement pas d'usure des coussinets 35 et ces derniers ne risquent pas davantage de marquer la barre de matière en cours d'usinage.

Pendant la majeure partie de l'usinage de cette barre 2, le tasseau 42 reste immobile. A l'approche de la fin de cet usinage, quand le raccord 18, après être sorti du tube 7, s'engage dans l'anneau 46, il entraîne le disque 45, le tasseau 42 et la bague 36 en rotation, puisqu'il tourne lui-même avec la barre 2. Après le passage de la tête 11 du poussoir au-delà de l'anneau 46, l'ensemble 46, 45, 42, 36 est immobilisé derechef par la chemise 8, non rotative, du poussoir. Depuis le moment où l'extrémité antérieure du raccord 18 pénètre dans l'anneau 46 et jusqu'à l'épuisement de la barre en cours d'usinage, notamment lorsque ce raccord 18 arrive à une distance de l'unité de serrage de la broche de poupée du tour, qui est inférieure à la longueur d'une pièce, l'anneau 46 balaie des faces latérales, d'abord du raccord 18. puis de la tête 11 et, enfin, de la chemise 8, l'huile qui est amenée dans le tube 7 par des buses (non représentées) qui sont réparties le long de ce tube et qui sont reliées à une dérivation de la conduite amenant l'huile à l'arrière du poussoir. L'huile ainsi balayée par l'anneau 46 dégouline dans le chéneau 5 d'où elle est récupérée.

Lorsque l'extrémité antérieure du raccord 18, après avoir passé au-delà de l'anneau 46, arrive contre les coussinets 35, elle provoque une extension de l'anneau 39 qui libère ces coussinets. Ceux-ci sont finalement éjectés de la bague 36 dans un carter qui est formé en partie par le chéneau 5 et en partie par un couvercle 47 (Fig. 1) et où ils peuvent être récupérés et remis en place dans la bague 36 en quelques secondes, lors du chargement d'une nouvelle barre de matière dans le tube 7. Vu leur masse relativement faible et une énergie cinétique par conséquent réduite, les coussinets 35 ne risquent ni de s'abîmer ni d'endommager le carter qui les reçoit au moment de leur éjection.

La deuxième forme d'exécution du dispositif de guidage selon l'invention (Fig. 3) est destinée à soutenir des barres de matière 2a de diamètre nettement plus petit que la capacité du tour. Le tube de guidage 7 de la première forme d'exécution est remplacé par un tube 7a de plus petit diamètre. Le tigeron central 15a de la tête 11a du poussoir qu'il contient pivote dans des paliers à aiguilles 48 et il bute axialement contre une bille 49. A part ces différences, il est conformé de la même façon que le poussoir de la première forme d'exécution et il est commandé de la même manière.

Les moyens 27a, qui sont destinés à empêcher la barre de matière en cours d'usinage de vibrer, ne diffèrent de ceux de la première forme d'exécution qu'en deux points. Premièrement, ce ne sont pas les coussinets eux-mêmes qui sont introduits dans la bague intérieure 36 du roulement à billes 31, mais un réducteur décrit ci-après. Deuxièmement, le tasseau 42 est garni d'un disque 50 présentant une ouverture centrale dont le diamètre correspond à celui du tube 7a. Ce disque 50 porte aussi un anneau torique 51 en matière caoutchouteuse ou similaire dans la paroi de son ouverture centrale et le diamètre interne de cet anneau 51 est aussi ajusté au diamètre du poussoir de façon à balayer l'huile que ce dernier emporte à sa sortie du tube 7a.

Le réducteur destiné à être introduit dans la bague intérieure 36 du roulement à billes 31, en lieu et place des coussinets 35 de la première forme d'exécution, comprend une pièce 52 formant cage pour un anneau torique 53 en matière caoutchouteuse ou similaire. Le profil de la face externe de cette pièce 52 est identique à celui des coussinets 35 de la première forme d'exécution. La bague extérieure 54 d'un roulement à billes 55 est fixée dans la pièce 52 par un circlip intérieur 56. Deux coussinets 57, analogues aux coussinets 35, sont engagés dans l'alésage de la bague intérieure 58 du roulement à billes 55, où ils sont retenus normalement en place par l'anneau 53, comme les coussinets 35 de la première forme d'exécution. La résistance à la traction de cet anneau 53 est toutefois nettement inférieure à celle de l'anneau 39, en raison de la différence entre les diamètres de ces anneaux.

Pendant l'usinage de la barre de matière 2a, les coussinets 57 et la bague 58 tournent avec cette barre dans la pièce 52, qui peut elle-même tourner dans la lunette 28, mais à une vitesse très lente. Comme l'ouverture des coussinets 57, qui est aménagée par l'usager du dispositif, est ajustée à la section des barres qu'il s'agit d'usiner, le poussoir provoquera l'éjection des coussinets 57 en passant à travers le dispositif décrit, lorsque la barre en cours d'usinage aura un diamètre inférieur à celui du poussoir. Le choix opéré de la résistance à la traction des anneaux 39 et 53 garantit que le poussoir éjecte les coussinets 57 en laissant la pièce 52 en place, quand il traverse le dispositif décrit.

Lorsque la barre de matière en travail à le même diamètre que le poussoir, comme la barre 2a représentée à la Fig. 3, le réducteur décrit n'est pas indispensable, car l'huile introduite dans le tube 7a, de la même manière que dans le tube 7 de la première forme d'exécution, suffit à empêcher cette barre de vibrer.

Bien que dans cette seconde forme d'exécution, les barres de matière soient généralement entraînées à de plus grandes vitesses de rotation que les barres de grand diamètre de la première forme d'exécution, afin d'obtenir la même vitesse linéaire de coupe des burins, les coussinets 57 ne sont pas exposés au risque d'usure. Vu la faible inertie due à leurs dimensions réduites, ils ne patinent pas longtemps autour de la barre 2a, quand celle-ci commence à être entraînée en rotation à grande vitesse. Par ailleurs, les coussinets 57 ne risquent ni de s'abîmer ni d'endommager le carter du dispositif sous l'effet de la force centrifuge au moment de leur éjection, en raison de leur masse réduite.

Comme au maximum trois tubes de guidage de différents diamètres suffisent pour permettre l'usinage dans un tour donné de barres de n'importe quel diamètre compris entre le plus grand, égal à la capacité du tour et le plus petit, égal environ au quart de cette capacité, l'usager du dispositif selon l'invention n'aura besoin au plus que de trois disques à monter alternativement dans le tasseau 42, d'un réducteur et de deux jeux de coussinets ajustés aux diamètres des barres qu'il est appelé à usiner, les diamètres extérieurs des coussinets de l'un de ces jeux étant adaptés à la bague 36 du roulement 31 et les diamètres extérieurs des coussinets de l'autre jeu étant adaptés à la bague 58 du roulement à billes 55. La mise en place des disques 45, 50 dans le tasseau 42 et des coussinets avec ou sans réducteur est immédiate. Elle ne requiert, en effet, ni serrage ni ajustage quelconque.

Il ressort de la description précédente que les roulements à billes 31, 32, la bague d'espacement 33, l'anneau 39, le tasseau 42 et les billes à ressort 59, qui retiennent normalement en place les disques 45, 50, sont des éléments permanents du dispositif de guidage selon l'invention, que le réducteur 52-55 est un accessoire unique et que seuls les disques 45, 50 et les coussinets 35 ou 57 sont destinés à être interchangés. Les disques 45, 50 et les coussinets 35, 57 sont cependant des éléments simples, donc peu coûteux. A l'instar de l'ensemble du dispositif selon l'invention, ils sont peu encombrants.

R E V E N D I C A T I O N S :

1.      Dispositif de guidage d'une barre de matière au cours de son usinage dans un tour automatique, comprenant:
- un tube coaxial à la broche de la poupée du tour, dans lequel un poussoir tient lieu de palier à l'extrémité postérieure de la barre de matière et agit sur celle-ci pour en assurer l'avance jusqu'à épuisement
- et des coussinets semi-cylindriques, plaqués l'un contre l'autre dans un alésage ouvert en direction du tour, et empêchant la barre de vibrer, caractérisé
- en ce que le dit alésage est formé dans une pièce (36, 58) qui est montée folle en rotation et de façon permanente dans un support (28, 52) disposé entre le dit tube (7, 7a) et le tour (1)
- et en ce que les dits coussinets (35, 57) délimitent entre eux une ouverture de même forme que la barre de matière (2, 2a), de façon à enserrer cette dernière avec un jeu juste suffisant pour la laisser coulisser librement.

2.      Dispositif de guidage selon la revendication 1,
caractérisé
en ce que la dite pièce (36, 58) dans laquelle est formé le dit alésage est montée sur roulement à billes.

3.      Dispositif de guidage selon la revendication 1,
caractérisé
en ce que la dite pièce dans laquelle est formé le dit alésage est constituée par la bague (36, 58) d'un roulement à billes (31, 55) qui porte le chemin de roulement intérieur des billes.

4.      Dispositif de guidage selon l'une ou l'autre des revendications précédentes,
caractérisé
par au moins un organe élastique (39, 53) qui retient normalement les dits coussinets (35, 57) axialement en place dans le dit alésage, mais qui s'efface sous l'action de la tête (11, 18; 11a) du poussoir, quand celle-ci entre en contact avec les dits coussinets (35, 57) avant de s'engager dans la broche (3) de la poupée du tour (1).

5.      Dispositif de guidage selon la revendication 4, caractérisé

- en ce que le dit organe élastique est constitué par un anneau torique (39, 53) en matière caoutchouteuse ou similaire,

    - que la pièce (36, 58) montée folle en rotation retient axialement en place dans une cage (40)

    - et dont un segment annulaire entre librement dans une gorge périphérique (41) des dits coussinets (35, 57).


6.      Dispositif de guidage selon la revendication 5, caractérisé

- en ce que la pièce (36, 58) portant les dits coussinets (35, 57) et la dite cage (40) sont logés dans une lunette (28) solidaire du bâti (5, 6) du dispositif de guidage,

- en ce que deux roulements à billes (31, 32), séparés par une bague d'espacement (33), sont fixés en permanence dans la dite lunette (28),

- en ce que le premier (31) des dits roulements à billes tient lieu de palier aux dits coussinets (35, 57),

- en ce qu'un tasseau (42) est fixé à la bague intérieure (43) du second (32) des dits roulements à billes, avec laquelle il peut tourner librement

- et en ce que le dit tasseau (42) contient un disque amovible (45, 50) présentant une ouverture centrale garnie d'un anneau torique (46, 51) en matière caoutchouteuse ou similaire, qui fait saillie de la paroi de la dite ouverture centrale et dont le diamètre interne est légèrement inférieur à celui du dit poussoir (8, 11, 18; 8a, 11a).


7.      Dispositif de guidage selon la revendication 6, caractérisé

- en ce que pour usiner des barres de matière (2) dont le diamètre est égal à la capacité du tour (1) ou quelque peu plus petit, les dits coussinets (35) sont engagés directement dans la bague intérieure (36) du premier (31) des dits roulements à billes, avec laquelle ils peuvent tourner librement

- et en ce que la dite bague d'espacement (33) tient lieu de cage à l'anneau de retenue escamotable (39) des dits coussinets.


8.      Dispositif de guidage selon la revendication 6, caractérisé

- en ce que pour usiner des barres de matière (2a) de diamètre plus petit que la capacité du tour, les dits coussinets (57) sont engagés dans la bague intérieure (58) d'un roulement à billes (55) dont la bague extérieure (54) est fixée dans la pièce (52) présentant la cage de l'anneau de retenue escamotable (53) des dits coussinets, cette pièce (52) constituant un réducteur dont la face externe a les mêmes dimensions et est constituée de la même façon que les coussinets (35) pour barres de matière de diamètre égal à la capacité du tour ou quelque peu plus petit, de manière à pouvoir être engagée dans la bague intérieure (36) du premier (31) des dits roulements à billes, où elle est maintenue par l'anneau (39) qui sert à retenir les coussinets (35) pour barres de matière de diamètre égal à la capacité du tour ou quelque peu plus petit

- et en ce que la section de ce dernier anneau (39) est plus grande que celle de l'anneau (53) retenant les coussinets (57), de façon que le poussoir (8a, 11a) fasse sortir les coussinets (57) de leur alésage en laissant le réducteur (52) en place.

Fig. 1

**Fig. 2**

Fig. 3

0103665

Office européen
des brevets

RAPPORT DE RECHERCHE EUROPEENNE

Numéro de la demande

EP   82 81 0392

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 822 569  (EISINGER) <br> * Page 7, lignes 7-18; figures 1, 2 * | 1 | B 23 B   13/12 <br> B 23 B   13/08 |
| Y | GB-A-1 431 257  (HAGENUK) <br> * Revendications  1,  2; page 2, lignes 5-16; figures 1, 2 * | 1 | |
| Y | US-A-3 206 220  (FERRANTI) <br> * Colonne  1, ligne 68 - colonne 2, ligne 26; figures 1-3 * | 1 | |
| Y | US-A-4 129 220  (PETERSON et al.) <br> * Colonne 3, lignes 45-52; figure 3 * | 1 | |
| Y | US-A-3 074 566  (MacBLANE) <br> * Colonne  1, ligne 58 - colonne 2, ligne 20; figures 1, 2, 4, 7 * | 1 | DOMAINES TECHNIQUES, RECHERCHES (Int. Cl. ³) <br><br> B 23 B   13/00 |
| D,Y | DE-A-2 930 310  (I.E.M.C.A.) <br> * Page 5, ligne 17 - page 7, ligne 30; figures 1, 2 * | 1 | |
| A | DE-U-7 722 027  (STE DE VENTE ET DE FABRICATION POUR LE DECOLLETAGE LNS S.A.) <br> * Revendication * | 1 | |

---        -/-

Le présent rapport de recherche a été établi pour toutes les revendications

| Lieu de la recherche <br> BERLIN | Date d'achèvement de la recherche <br> 04-05-1983 | Examinateur <br> MARTIN A E W |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82

**Office européen des brevets**

## RAPPORT DE RECHERCHE EUROPEENNE

| DOCUMENTS CONSIDERES COMME PERTINENTS | | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| D,A | GB-A-1 063 266 (BROWN & WARD LTD.)<br>* Revendication 1; figures 3, 4 * | 1 | |
| D,A | EP-A-0 026 042 (EMI LTD.)<br>* Revendication 5; figures 1, 2 * | 1 | |
| D,A | US-A-2 608 746 (HARNEY) | | |

DOMAINES TECHNIQUES RECHERCHES (Int. Cl. ³)

Le présent rapport de recherche a été établi pour toutes les revendications

| Lieu de la recherche<br>BERLIN | Date d'achèvement de la recherche<br>04-05-1983 | Examinateur<br>MARTIN A E W |
|---|---|---|